# EUROPEAN PATENT APPLICATION

(11) **EP 4 424 530 A2**
(43) Date of publication of application: **04.09.2024**
(21) Application number: 24382229.3
(22) Date of filing: 01.03.2024
(51) Int. Cl.: B60C 27/18, D04B 21/00, B60C 27/06, B60C 27/12

(54) **SLEEVE FOR COVERING VEHICLE WHEELS AND A METHOD OF MANUFACTURING A SLEEVE FOR COVERING VEHICLE WHEELS**

(30) Priority: 02.03.2023 ES 202330182
(71) Applicant: Isse Safety, S.L., 08192 Barcelona (ES)
(72) Inventor: VALLS CHAPARRO, Isaac, 08192 Barcelona (ES)
(74) Representative: Isern Patentes y Marcas S.L.

(57) **Abstract**

The present invention relates to a sleeve for covering vehicle wheels, which consists of a fabric band having an annular arrangement and therefore with a circumferential path as a result of said annular geometry, said band having such proportions and being enabled to cover and surround an external region of a wheel of a vehicle, characterised in that the fabric band has a central area along its circumferential path and at least one lateral area adjacent to the central area following the same circumferential path, wherein the at least one adjacent lateral area of the band has a surface density value lower than the surface density value of the central area of the same band; wherein said band also presents a textile or fabric continuity in the mutual contact between its central area and at least one adjacent lateral area, the band being formed in one piece or textile body.

## Description

### OBJECT OF THE INVENTION

The purpose of the present application for invention is to register a sleeve for covering vehicle wheels and a method of manufacturing a sleeve for covering vehicle wheels, which incorporates notable innovations and advantages over the techniques used to date.

More specifically, the invention proposes the development of a sleeve for covering vehicle wheels and a method of manufacturing a sleeve for covering vehicle wheels, which, due to its particular arrangement, allows greatly improved performance in its use during covering of the wheel of a vehicle.

### BACKGROUND OF THE INVENTION

In the current state of the art, the usual sleeves used to cover vehicle wheels are known, used above all with the purpose of ensuring correct adhesion of such wheels during rolling, especially in the case of rolling on surfaces prone to cause unwanted slipping and skidding, such as on wet or snow- or ice-covered road surfaces.

Despite the usual good properties known in said sleeves, it may also be common that during use and as a consequence of the rolling and subsequent turning of the wheel, the aforementioned sleeves may move from their correct covering position in the wheel, and even completely come off its covering position in the wheel.

This circumstance can occur above all as a consequence of the fact that when the aforementioned sleeves are arranged covering the vehicle wheels, they are subjected to the same turning movement of the wheel, which means that the same sleeve is in turn subjected to inertia and centrifugal stress towards the outside of the wheel, and which could result in the sleeve coming off its covering position in the wheel, or at least a resulting incorrect positioning of the sleeve on the wheel itself.

Also, the same tyres known in the state of the art can be greatly improved in their adhesion properties on different rolling surfaces or also in their tribological properties and in their general mechanical properties, which is very necessary on difficult rolling surfaces, such as wet, snowy or icy roads.

The present invention contributes to solving the present problem, as it allows greatly improved performance in its use during the covering of the wheel of a vehicle, both in terms of maintaining a correct position on a wheel during its use, as well as for improving its adhesion performance and/or tribological and mechanical properties in general, as well as its durability.

### DESCRIPTION OF THE INVENTION

The present invention has been developed in order to provide a sleeve for covering vehicle wheels, which consists of a fabric band having an annular arrangement and therefore with a circumferential path as a result of said annular geometry, said band having such proportions and being enabled to cover and surround an external region of a wheel of a vehicle, wherein the fabric band has a central area along its circumferential path and at least one lateral area adjacent to the central area following the same circumferential path, wherein the at least one adjacent lateral area of the band has a surface density value lower than the surface density value of the central area of the same band; wherein said band also presents a textile or fabric continuity in the mutual contact between its central area and at least one adjacent lateral area, the band being formed in one piece or textile body.

Preferably, in the sleeve for covering vehicle wheels, the band is enabled to totally or partially cover at least the tread and at least one side of the wheel of a vehicle.

Alternatively, in the sleeve for covering vehicle wheels, the central area of the band corresponds to at least the tread of the wheel and the at least one lateral area corresponds to at least one flank of the same wheel.

Alternatively, in the sleeve for covering vehicle wheels, the central area of the band corresponds to the tread and also partially over at least one flank of the wheel.

Alternatively, in the sleeve for covering vehicle wheels, there are at least two adjacent lateral areas, resulting in at least one adjacent lateral area on both sides of the central area of the band, following the circumferential path of the annular geometry of the band.

Preferably, in the sleeve for covering vehicle wheels, the central area of the band corresponds at least to the tread of the wheel and at least one adjacent lateral area corresponds to each of the flanks of the wheel.

Preferably, in the sleeve for covering vehicle wheels, the band has an adjacent lateral area arranged on each side of the central area following the circumferential path of the annular geometry of the band.

Additionally, in the sleeve for covering vehicle wheels, the lateral areas of the band have a symmetry in relation to the central area of the same band.

Additionally, in the sleeve for covering vehicle wheels, the band incorporates an elastic means on at least one of its lateral edges following the circumferential path of the annular geometry of the band.

Alternatively, the sleeve for vehicle wheels is made of polymeric material or the like.

Preferably, in relation to the sleeve for covering vehicle wheels, the wheel incorporates a tyre.

Additionally, in the sleeve for covering vehicle wheels, the central area of the band has projections on its surface.

Preferably, in the sleeve for covering vehicle wheels, the projections have a linear arrangement.

Preferably, in the sleeve for covering vehicle wheels, the projections have a linear and rectilinear arrangement.

Preferably, in the sleeve for covering vehicle wheels, in which the projections have a linear and rectilinear arrangement and with an orientation that is parallel to the axial axis of the annular arrangement of the band.

Alternatively, in the sleeve for covering vehicle wheels, the textile band incorporates metallic yarns in the total or partial formation of its constituent fabric.

Alternatively, in the sleeve for covering vehicle wheels, the metal yarns are totally or partially made of titanium.

Alternatively, in the sleeve for covering vehicle wheels, the metal yarns are totally or partially made of stainless steel.

Alternatively, in the sleeve for covering vehicle wheels, the projections of the band are metallic in nature.

Alternatively, in the sleeve for covering vehicle wheels, the band simultaneously incorporates in its conformation at least yarns of a polymeric nature or the like and yarns of a metallic nature or the like.

Method of manufacturing a sleeve for covering vehicle wheels, comprising an arrangement and supply of warp yarns from and along a warp and another arrangement and supply of weft yarns from and along a creel, the warp and the creel being mutually positioned and enabled to result in a fabric band, wherein the amount and/or properties of the warp yarns supplied is heterogeneous along the same warp, resulting in the fabric band having a different surface density along its surface depending on the heterogeneity in the number and/or properties of the warp yarns supplied along the same warp.

Additionally, in the method of manufacturing a sleeve for covering vehicle wheels, the number and/or properties of the weft yarns supplied is heterogeneous along the creel, resulting in the fabric band having projections on its surface that are in turn resulting from said differentiated weft yarns supplied from the creel, the projections being in turn oriented in the direction of the arrangement of the weft yarns supplied from the creel.

Alternatively, in the method of manufacturing a sleeve for covering vehicle wheels, the differentiated weft yarns have a differentiated thickness.

Alternatively, in the method of manufacturing a sleeve for covering vehicle wheels, the differentiated weft yarns are the result of a joining of several weft yarns supplied in the same creel.

Alternatively, in the method of manufacturing a sleeve for covering vehicle wheels, the warp yarns and/or the weft yarns are entirely or partially metallic in nature.

Alternatively, in the method of manufacturing a sleeve for covering vehicle wheels, the warp yarns and/or the weft yarns are entirely or partially made of titanium.

Alternatively, in the method of manufacturing a sleeve for covering vehicle wheels, the warp yarns and/or the weft yarns are entirely or partially made of stainless steel.

Alternatively, the method of manufacturing a sleeve for covering vehicle wheels simultaneously inserts warp and/or weft yarns of at least polymeric or similar nature and at least of metallic or similar nature.

A sleeve for covering vehicle wheels, which is the result of the manufacturing method of a sleeve for covering vehicle wheels.

Due to the present invention, greatly improved performance is achieved when using a sleeve while covering a vehicle wheel, both in terms of maintaining a correct positioning on a wheel during use, and to improve its adhesion performance and/or tribological and mechanical properties in general.

Other features and advantages of the sleeve for covering vehicle wheels object of the present invention will become apparent from the description of a preferred but not exclusive embodiment illustrated by way of non-limiting example in the attached drawings, in which:

### BRIEF DESCRIPTION OF THE DRAWINGS

Figure 1 is a perspective and schematic view of a preferred embodiment of the sleeve for covering vehicle wheels of the present invention, and also indicative of its use on a wheel.
Figure 2 is a schematic view indicative of a preferred embodiment of a manufacturing method of a sleeve for covering vehicle wheels of the invention.

### DESCRIPTION OF A PREFERRED EMBODIMENT

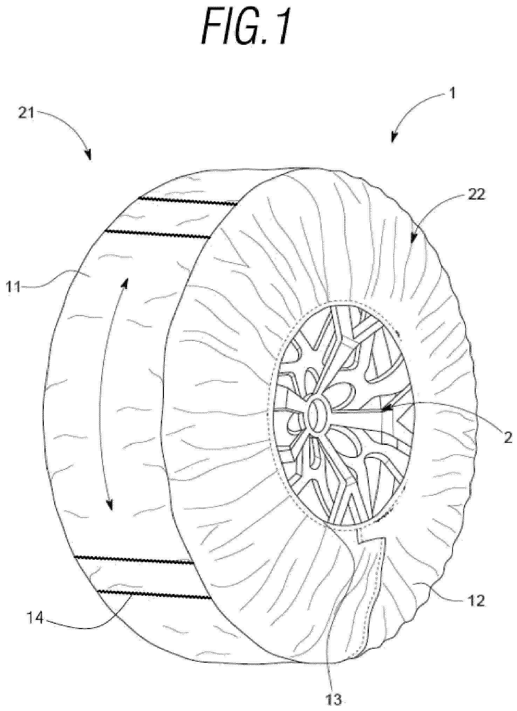

As shown schematically in Figure 1, the sleeve for covering vehicle wheels of the proposed invention consists of a textile fabric band 1 having an annular arrangement, which means that it has an axial axis and that a circumferential path can be followed along the same, indicated by the curved arrow in figure 1 and resulting from said annular geometry.

In this preferred embodiment, the band 1 is made of polymeric material or the like.

The band 1 has such proportions and is enabled to cover and surround an external region of a vehicle wheel 2, the wheel 2 appearing in figure 1 already covered by the band 1.

Also in this preferred embodiment, the wheel 2 incorporates a tyre.

As can be seen in this preferred embodiment represented in Figure 1, the band 1 of the sleeve for covering vehicle wheels of the invention is enabled due to its proportions to cover the tread 21 and the flanks 22 of a vehicle wheel 2.

According to the invention itself, the fabric band 1 has a central area 11 along its circumferential path and at least one lateral area 12 adjacent to the central area 11, taking as reference the aforementioned circumferential path that is indicated with the curved arrow in figure 1. In this preferred embodiment represented in Figure 1, there are two lateral areas 12 that are arranged, one on each side of the central area 11 of the band 1, only one lateral area 12 arranged on one of the sides of the central area 11 being visible in Figure 1.

As can also be seen in Figure 1, in the sleeve for covering vehicle wheels of the invention, the central area 11 of the band 1 corresponds to or covers at least the tread 21 of the wheel 2, and the lateral areas 12 correspond to or cover the flanks 22 of the same wheel 2.

In some preferred embodiments of the invention, the central area 11 can even partially extend its covering over the flanks 22 of the wheel 2.

Moreover, in the sleeve for covering vehicle wheels of the invention, the band 1 incorporates elastic means 13 on its lateral edges, in order to help and ensure the correct adjustment and positioning of the band 1 covering the tread 21 and the flanks 22 of the wheel 2.

The sleeve for covering vehicle wheels of the proposed invention is characterised in that in the fabric band 1, the lateral areas 12 adjacent to the central area 11 have a surface density value that is lower than the surface density value of the central area 11 of the same band 1.

This technical detail represents a very important technical advantage in the use of the sleeve for covering vehicle wheels of the proposed invention.

This is because when the sleeve of the invention is arranged covering a vehicle wheel 2, as can also be seen in Figure 1, the operation of the same wheel 2 means that it must roll and turn on itself, as is known in the state of the art.

This in turn therefore means that the band 1 of the sleeve for covering vehicle wheels of the invention, which is arranged and covering the wheel 2, is subjected to the same turning movement of the wheel 2, which entails an inertia and centrifugal stress on the same band 1 outwards of the wheel 2, with the consequent danger that the lateral areas 12 of the band 1 end up coming out of their correct position on the flanks 22 of the wheel 2, even overcoming the resistance of the elastics means 13 on the lateral edges of the band 1.

This technical detail explained and referred to the fact that the lateral areas 12 adjacent to the central area 11 have a surface density value lower than the surface density value of the central area 11 of the same band 1, therefore means that the centrifugal stress to which the adjacent lateral areas 12 are subjected is noticeably lower than the stress to which the central area 11 of the same band 1 is subjected due to the same turning movement of the wheel 2 and the band 1.

Because of this, the lateral areas 12 of the band 1 will much better maintain their correct position on the flanks 22 of the wheel 2 without coming off or moving due to the centrifugal stress caused by the turning movement of the wheel 2.

By keeping the lateral areas 12 and the band 1 itself in their correct position, possible entanglement, friction or other incidence of the lateral areas 12 and the same band 1 on different internal elements of the vehicle itself is also avoided when the turning movement of the wheel 2 occurs.

In addition, the sleeve for covering vehicle wheels of the invention, due to its explained arrangement, will allow a vehicle to circulate at higher speeds without the consequent higher turning speed in its wheels 2 resulting in the lateral areas 12 and the same band 1 coming off from its correct position.

In addition, the difference in surface densities referred to in the sleeve for covering vehicle wheels of the present invention means that during use, fewer wrinkles are generated in the central area 11 of the band 1 than in the adjacent lateral areas 12, precisely because of this difference in their surface densities.

This therefore means, according to the explained positioning of the band 1 on the wheel 2, which results in a lower presence of wrinkles in the tread 21 and a greater presence of wrinkles in the flanks 22 of the same wheel 2, which in turn will entail greater durability of the sleeve for covering vehicle wheels of the present invention, since the wrinkles are more prone to breakage in use, and as the wear and biasing is greater on the tread 21 of the wheel 2 that on the flanks 22, as there are fewer wrinkles specifically on the tread 21, the final durability will be greater.

The sleeve for covering vehicle wheels of the present invention may have multiple preferred embodiments, such as including a plurality of adjacent lateral areas 12 on the sides of the central area 11, with different surface density values lower than the surface density value of the central area 11 of the band 1.

Also in this preferred embodiment represented in Figure 1, the lateral areas 12 in the band 1 present a symmetry in relation to the central area 11 of the same band 1.

Another very important technical detail in the sleeve for covering vehicle wheels of the present invention is that the band 1 presents a textile or fabric continuity in the mutual contact between its central area 11 and the adjacent lateral areas 12, which thus entails that the band 1 is formed and made up of one piece or textile body.

This therefore means that in the sleeve for covering vehicle wheels of the present invention, the central area 11 and the lateral areas 12 of the band 1 do not need to be joined by sewing or the like, which would represent a notable risk of breakage and detachment due to the stress and wear suffered in use during the rolling of the wheel 2.

Thanks to the textile continuity of the band 1 between its central area 11 and its lateral areas 12, as the band 1 is formed in one piece or textile body, the band 1 of the sleeve of the invention is more resistant to possible breakages and detachments in that area during its use, because it is not sewn but manufactured directly and entirely from a textile machine as a single fabric or piece or textile body.

Another detail added to the sleeve for covering vehicle wheels of the invention is that the band 1 can have in its central area 11 projections 14 on its surface, as can be seen in Figure 1.

In the embodiment represented in Figure 1, the projections 14 have a linear and rectilinear arrangement, and with an orientation that is parallel to the axial axis of the annular arrangement of the band 1.

These projections 14 in the central area 11 of the band 1 can have tribological properties, very useful to ensure correct adhesion of the sleeve for covering vehicle wheels of the invention to the ground during the rolling of the wheel 2, for example on surfaces more prone to potential slipping such as wet or snowy surfaces.

The projections 14 also provide better mechanical traction properties in their use to the band 1 and therefore to the sleeve for covering vehicle wheels of the invention.

In other preferred embodiments of the sleeve for covering vehicle wheels of the invention, the textile band 1 can also incorporate metallic yarns in the total or partial formation of its constituent fabric, such as by means of yarns made of titanium, stainless steel, etc., or other suitable metal material or metal alloy.

With this, the properties and mechanical traction performance of the sleeve for covering vehicle wheels of the proposed invention can be significantly improved, being more resistant and/or durable under more demanding biasing during use.

Accordingly, the projections 14 can also be metallic in nature, with the better mechanical properties and performance that this entails.

The sleeve for covering vehicle wheels of the invention can therefore present its textile band 1 formed by a simultaneous variability of yarns of different nature, such as polymeric or metallic, according to the precise and specific different requirements and biasing expected while it is used, and can therefore adapt to multiple expected use and/or marketing requirements.

The invention also includes a method of manufacturing a particular sleeve for vehicle wheels.

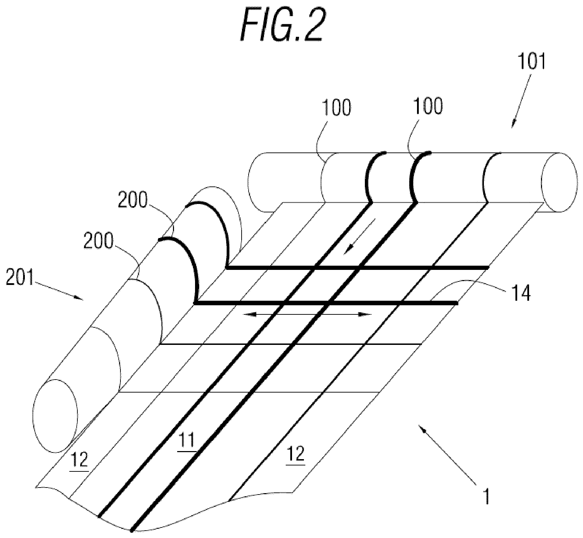

As figure 2 schematically shows, said manufacturing method comprises an arrangement and supply of warp yarns 100 and weft yarns 200 using a textile machine or weaving machine or loom.

The warp yarns 100 are supplied from and along a warp 101 or warping beam or warping creels, which is part of a textile machine or weaving machine or loom.

The weft yarns 200 are supplied from and along a weft creel 201 of the same textile machine or weaving machine or loom, with a mutual positioning between the warp 101 and the creel 201 as is already known in the state of the art.

As figure 2 schematically shows, the warp yarns 100 are supplied from the warp 101 in the direction indicated by the unidirectional arrow in Figure 2, and the weft yarns 200 are supplied from the cone or cones of the creel 201 and continuously distributed back and forth by a clamp (not shown in the drawings) of the same weaving machine and in the direction indicated by the double arrow in Figure 2 and transversely to the warp yarns 100.

The aforementioned arrangement and supply of warp yarns 100 in the warp 101 and of weft yarns 200 in the creel 201, and their mutual crossing, results in a fabric band 1 for a particular sleeve for vehicle wheels, such as, in a possible scenario, the one described above.

The manufacturing method included in the present invention also incorporates the detail that the distribution and allocation of the number and/or properties of the warp yarns 100 supplied from the warp 101 is heterogeneous or variable along the same warp 101.

As figure 2 schematically shows, in this preferred embodiment the warp yarns 100 have different thickness properties that vary along the warp 101. This therefore means that the fabric band 1 resulting from said manufacturing method has a different surface density along its surface, in accordance with the heterogeneity or variability in the distribution and allocation of the number and/or properties of the warp yarns 100 supplied along the same warp 101.

The same manufacturing method included in the present invention may also present the added detail that the distribution and allocation of the number and/or properties of the weft yarns 200 is heterogeneous and variable along the same creel 201. This means, therefore, that the fabric band 1 resulting from said manufacturing method has linear projections 14 on its surface, as, for example, have been described above in a possible scenario, and which are in turn resulting from the aforementioned differentiated weft yarns 200 supplied from the creel 201, said projections 14 being oriented in the direction of the arrangement of the weft yarns 200 from the creel 201.

In a preferred embodiment of the manufacturing method included in the present invention, the weft yarns 200 can have a different thickness along the creel 201, as for example figure 2 schematically shows, or several weft yarns 200 can be joined together at the same time and increasing their resulting thickness. This therefore means that the aforementioned projections 14 are generated in this manner, and that they correspond to the weft yarns 200 of greater resulting thickness that are supplied from the creel 201.

In another preferred embodiment of the manufacturing method included in the present invention, the warp yarns 100 and/or the weft yarns 200 can be totally or partially metallic in nature, such as titanium, stainless steel, etc., or other suitable metal material or metal alloy.

Therefore, the manufacturing method described in the present invention also allows the insertion of different warp 100 and weft 200 yarns of different nature, for example polymeric or metallic, according to the precise and specific different requirements and biasing expected in the resulting sleeve for covering vehicle wheels, and can therefore be adapted to multiple expected use and/or marketing requirements.

The manufacturing method included in the present invention also has the technical advantage of improving manufacturing speed.

It also has the advantage of being able to incorporate warp 100 and weft 200 yarns of different colours, in order to provide a desired colour distribution in the resulting fabric band 1.

The present invention also includes a sleeve for covering vehicle wheels as described above, characterised in that it may have been made with a manufacturing method as described above and which is also included in the present invention.

In particular, the detail explained above for the sleeve for covering vehicle wheels of the proposed invention, in which the fabric band 1 has a central area 11 and lateral areas 12 adjacent to the central area 11, with a surface density value in the lateral areas 12 that is lower than the surface density value of the central area 11 of the same band 1, can be achieved by means of a manufacturing method described and included in the same invention.

Specifically, the heterogeneity and variability in the distribution and allocation of the number and/or properties of the warp yarns 100 supplied from and along the warp 101, means that the band 1 resulting from manufacturing may have a central longitudinal area 11 with a surface density greater than the surface density of the adjacent, also longitudinal, lateral areas 12 as also indicated schematically in figure 2.

Depending on the greater or lesser number of warp yarns 100 distributed and supplied from and along the warp 101 or the different properties that these warp yarns 100 have along the warp 101, such as their thickness, a central area 11 is generated in the band 1 with a surface density greater than the surface density of the adjacent lateral areas 12, as figure 2 schematically shows.

The other very important detail referred to in the sleeve for covering vehicle wheels of the invention as described above, the fact that the band 1 has textile continuity between its central area 11 and its lateral areas 12 as the band 1 is formed in one piece or textile body can also be the result of the manufacturing method described and included in the present invention.

Indeed, by means of the manufacturing method described and included in the present invention, the central area 11 and the adjacent lateral areas 12 can be generated in the same textile band 1 with textile continuity between them and without requiring intermediate sewing between them, resulting in the band 1 being formed in one piece or textile body and manufactured directly from a textile machine suitable for this purpose as a single fabric, and with the consequent explained advantages of not requiring any sewing between the central area 11 and the adjacent lateral areas 12 in the same textile band 1, as figure 2 also shows.

The other possible detail also present in the sleeve for covering vehicle wheels of the present invention in which the central area 11 of the band 1 has projections 14 on its surface with better tribological and mechanical traction properties, can also be achieved. by means of a manufacturing method described and included in the same invention.

Indeed, by means of the manufacturing method described and included in the present invention, the projections 14 on the surface of the central area 11 of the band 1 can be generated. This is due to the fact that the heterogeneity and variability in the number and/or properties of the weft yarns 200 supplied from and along the creel 201, means that in the band 1 resulting from manufacturing, the aforementioned projections 14 are generated oriented in the direction of the arrangement of the weft yarns 200 from the creel 201 and generated by the use of thicker weft yarns 200 or by bringing together several weft yarns 200 at the same time and increasing their resulting thickness. Figure 2 shows how a projection 14 in the band 1 is generated by a thicker weft yarn 200.

The details, shapes, dimensions and other accessory elements, as well as the materials used in the manufacture of the sleeve for covering vehicle wheels and the method of manufacturing a sleeve for covering vehicle wheels of the invention, may be conveniently replaced by others that are technically equivalent and do not deviate from the essential features of the invention or the scope defined by the claims included below.

## Claims

1. A sleeve for covering vehicle wheels, which consists of a fabric band (1) having an annular arrangement and therefore with a circumferential path as a result of said annular geometry, said band (1) having such proportions and being enabled to cover and surround an external region of a wheel (2) of a vehicle, **characterised in that** the fabric band (1) has a central area (11) along its circumferential path and at least one lateral area (12) adjacent to the central area (11) following the same circumferential path, wherein the at least one adjacent lateral area (12) of the band (1) has a surface density value lower than the surface density value of the central area (11) in the same band (1); wherein said band (1) further has a textile or fabric continuity in the mutual contact between its central area (11) and the at least one adjacent lateral area (12), the band (1) being formed in one piece or textile body.

2. The sleeve for covering vehicle wheels according to claim 1, wherein the band (1) is enabled to totally or partially cover at least the tread (21) and at least one flank (22) of the wheel (2) of a vehicle.

3. The sleeve for covering vehicle wheels according to claim 2, wherein the central area (11) of the band (1) corresponds to at least the tread (21) of the wheel (2) and the at least one lateral area (12) corresponds to at least one flank (22) of the same wheel (2).

4. The sleeve for covering vehicle wheels according to claim 3, wherein the central area (11) of the band (1) corresponds to the tread (21) and also partially over at least one flank (22) of the wheel (2).

5. The sleeve for covering vehicle wheels according to any of the preceding claims, wherein there are at least two adjacent lateral areas (12), resulting in at least one adjacent lateral area (12) on both sides of the central area (11) of the band (1), following the circumferential path of the annular geometry of the band (1).

6. The sleeve for covering vehicle wheels according to claim 5 when it depends on claim 3 or 4, wherein the central area (11) of the band (1) corresponds at least to the tread (21) of the wheel (2) and at least one adjacent lateral area (12) corresponds to each of the flanks (22) of the wheel (2).

7. The sleeve for covering vehicle wheels according to claim 6, wherein the band (1) has an adjacent lateral area (12) arranged on each side of the central area (11) following the circumferential path of the annular geometry of the band (1).

8. The sleeve for covering vehicle wheels according to any of claims 6 to 7 when they depend on claim 5, wherein the lateral areas (12) of the band (1) have a symmetry in relation to the central area (11) of the same band (1).

9. The sleeve for covering vehicle wheels according to any of the preceding claims, wherein the band (1) incorporates an elastic means (13) on at least one of its lateral edges following the circumferential path of the annular geometry of the band (1).

10. The sleeve for covering vehicle wheels according to any of the preceding claims, which is made totally or partially of polymeric material or the like.

11. The sleeve for covering vehicle wheels according to any of the preceding claims, wherein the central area (11) of the band (1) has projections (14) on its surface with a linear and/or rectilinear arrangement.

12. The sleeve for covering vehicle wheels according to claim 11, wherein the projections (14) have a linear and rectilinear arrangement, and with an orientation that is parallel to the axial axis of the annular arrangement of the band (1).

13. The sleeve for covering vehicle wheels according to any of the preceding claims, wherein the textile band (1) incorporates metallic yarns in the total or partial conformation of its constituent fabric.

14. A method of manufacturing a sleeve for covering vehicle wheels, comprising an arrangement and supply of warp yarns (100) from and along a warp (101) and another arrangement and supply of weft yarns (200) from and along a creel (201), the warp (101) and the creel (201) being mutually positioned and enabled to result in a fabric band (1), **characterised in that** the amount and/or properties of the warp yarns (100) supplied is heterogeneous along the same warp (101), resulting in the fabric band (1) having a different surface density along its surface depending on the heterogeneity in the amount and/or properties of the warp yarns (100) supplied along the same warp (101).

15. The method of manufacturing a sleeve for covering vehicle wheels, according to claim 14, wherein the number and/or properties of the weft yarns (200) supplied is heterogeneous along the creel (201), resulting in the fabric band (1) having projections (14) on its surface that are in turn resulting from said differentiated weft yarns (200) supplied from the creel (201), the projections (14) being in turn oriented in the direction of the arrangement of the weft yarns (200) supplied from the creel (201).
